Europäisches Patentamt

European Patent Office

Office européen des brevets

(19)

(11) Veröffentlichungsnummer: **0 253 118**
**B1**

(12) # EUROPÄISCHE PATENTSCHRIFT

(45) Veröffentlichungstag der Patentschrift:
25.10.89

(21) Anmeldenummer: 87107953.9

(22) Anmeldetag: 02.06.87

(51) Int. Cl.⁴: **F 16 D 23/12**, G 05 G 3/00

(54) **Kupplungshebel zur Betätigung einer Fahrzeugkupplung.**

(30) Priorität: 05.07.86 DE 3622701

(43) Veröffentlichungstag der Anmeldung:
20.01.88 Patentblatt 88/3

(45) Bekanntmachung des Hinweises auf die Patenterteilung:
25.10.89 Patentblatt 89/43

(84) Benannte Vertragsstaaten:
DE ES FR GB IT

(56) Entgegenhaltungen:
DE-A-2 931 816
DE-A-2 935 079
DE-A-3 240 076
DE-C-3 103 032
DE-C-3 418 772
FR-A-2 506 124
GB-A-2 055 437

(73) Patentinhaber: INA Wälzlager Schaeffler KG,
Industriestrasse 1-3 Postfach 1220, D-8522
Herzogenaurach (DE)

(72) Erfinder: Parzefall, Walter, Kettelerstrasse 1,
D-8526 Bubenreuth (DE)

(74) Vertreter: Klug, Horst, Dipl.- Ing. (FH), c/o INA
Wälzlager Schaeffler KG Postfach 12 20, D-8522
Herzogenaurach (DE)

## Beschreibung

Die Erfindung betrifft einen Kupplungshebel zur Betätigung einer Fahrzeugkupplung, der sich einenends an einem Schwenkpunkt abstützt und an dem andernends ein Betätigungselement angreift, und der zwischen den beiden Ende eine erste Durchbrechung aufweist, die allseitig größer als die Außenkontur des Kupplungsausrücklagers ist und eine zweite Durchbrechung, bei der an einander diametral gegenüberliegenden Stellen der Abstand ihrer seitlichen Begrenzungskanten so verringert ist, daß dort Anlagefläche für das Kupplungsausrücklager gebildet sind.

Kupplungshebel der genannten Art sind bekannt und geben bei den bisher gebräuchlichen sogenannten gedrückten Kupplungen keinen Anlaß zur Beanstandung. Wenn jedoch, wie dies in zunehmendem Maße gefordert wird, sogenannte gezogene Kupplungen zum Einsatz kommen, ergeben sich mit den bekannten Kupplungshebeln erhebliche Schwierigkeiten. Dies ist dadurch bedingt, daß bei derartigen Kupplungen der Kupplungshebel in Montagerichtung hinter dem Kupplungsausrücklager angeordnet sein muß, wodurch es ohne Zerstörung des Lagers und/oder des Druckringes nicht mehr möglich ist, ist ein derart montiertes Kupplungsausrücklager wieder zu demontieren.

Um diese Schwierigkeiten zu umgehen, wurde bereits ein einteiliger Kupplungshebel vorgeschlagen, der zwischen seinen beiden Enden eine Durchbrechung aufweist, die allseitig größer als die Außenkontur des Kupplungsausrücklagers ist, und die in Längsrichtung des Hebels in einen weiteren Bereich übergeht, in dem an einander diametral gegenüberliegenden Stellen der Abstand der seitlichen Begrenzungskanten der Durchbrechung so verringert ist, daß dort Anlageflächen für das Kupplungsausrücklager gebildet sind (DE-A-2 931 816).

Die vorgeschlagene Ausbildung gestattet es zwar, ein derart montiertes Kupplungsausrücklager ohne Zerstörung wieder zu demontieren. Dabei wirkt es sich jedoch nachteilig aus, daß der Kupplungshebel zur Längsverschiebung nicht nur an seinem frei zugänglichen Ende außer Eingriff mit dem Betätigungselement gebracht werden muß, vielmehr muß er hierzu auch an dem unzugänglichen Ende aus dem Abstützbolzen ausgehängt werden. Insbesondere dann, wenn der Bauraum in diesem Bereich sehr begrenzt ist, kann der Kupplungshebel nach dem Austausch des Kupplungsausrücklagers nur mit beträchtlichem Zeitaufwand wieder an dem von außen unzugänglichen und schlecht einzusehenden Abstützbolzen befestigt werden.

Der Erfindung liegt die Aufgabe zugrunde, einen Kupplungshebel für eine derartige Kupplung in einfacher Weise so auszubilden, daß beim Austausch des Kupplungsausrücklagers auf ein Lösen des Kupplungshebels vom Abstützbolzen verzichtet werden kann.

Diese Aufgabe wird erfindungsgemäß dadurch gelöst, daß der Kupplungshebel aus zwei sich wenigstens im Bereich der Durchbrechung überdeckenden Teilen besteht die längsverschieblich zueinander geführt sind, und von denen ein Teil die erste Durchbrechung aufweist, während das andere Teil die zweite Durchbrechung aufweist. Durch die vorgeschlagene Ausbildung ergibt sich der Vorteil, daß der Kupplungshebel nur noch außer Eingriff mit dem Betätigungselement gebracht werden muß, wodurch das Kupplungsausrücklager ohne großen Zeitaufwand und in einfacher Weise ausgewechselt werden kann.

Nach einer bevorzugten Ausführungsform der Erfindung ist vorgesehen, daß das eine Teil den Schwenkpunkt und das andere Teil den Angriffspunkt für das Betätigungselement enthält. Ein so ausgebildeter Kupplungshebel kann mit einfachen Mitteln als Blechziehteil gefertigt werden und schafft die Möglichkeit einer langen Überdeckung, wodurch die Festigkeit zusätzlich erhöht wird.

Eine weitere vorteilhafte Ausbildung der Erfindung sieht vor, daß die beiden Teile aus je einem flachen Mittelabschnitt mit seitlichen abgewinkelten Rändern bestehen, beide Teile so teleskopartig ineinander geführt sind, daß Mittelabschnitte und seitliche Ränder in Gleitkontakt miteinander stehen und in fluchtende Bohrungen der Ränder des einen Teiles Bolzen eingesetzt sind, die in Längsschlitze in den Rändern des anderen Teiles eingreifen. Durch diese Maßnahme wird eine sichere Führung erzielt, so daß die beiden Teile beim Verschieben von der Betriebsstellung in die Montagestellung nicht verkanten können.

Nach einer Weiterbildung der Erfindung ist vorgesehen, daß die sich überdeckenden Teile in der Betriebsstellung gegen axiale Verschiebung gesichert sind. Dabei ist die Ausbildung in einfacher Weise so getroffen, daß in den Begrenzungskanten der Längsschlitze Ausnehmungen vorgesehen sind, in die die Bolzen einrasten. Eine derartige Sicherung ist in einem Arbeitsgang mit dem Stanzen der Schlitze herzustellen, so daß hierzu keine zusätzlichen Bauteile oder Arbeitsgänge erforderlich sind.

Ein Ausführungsbeispiel der Erfindung ist in den Zeichnungen dargestellt und wird nachfolgend näher beschrieben. Es zeigen:

Figur 1 den montierten Kupplungshebel in einer Fahrzeugkupplung,

Figur 2 einen erfindungsgemäßen Kupplungshebel in Betriebsstellung,

Figur 3 den Kupplungshebel nach Figur 2 in Montagestellung und

Figur 4 eine vergrößerte Seitenansicht des Mittelabschnittes.

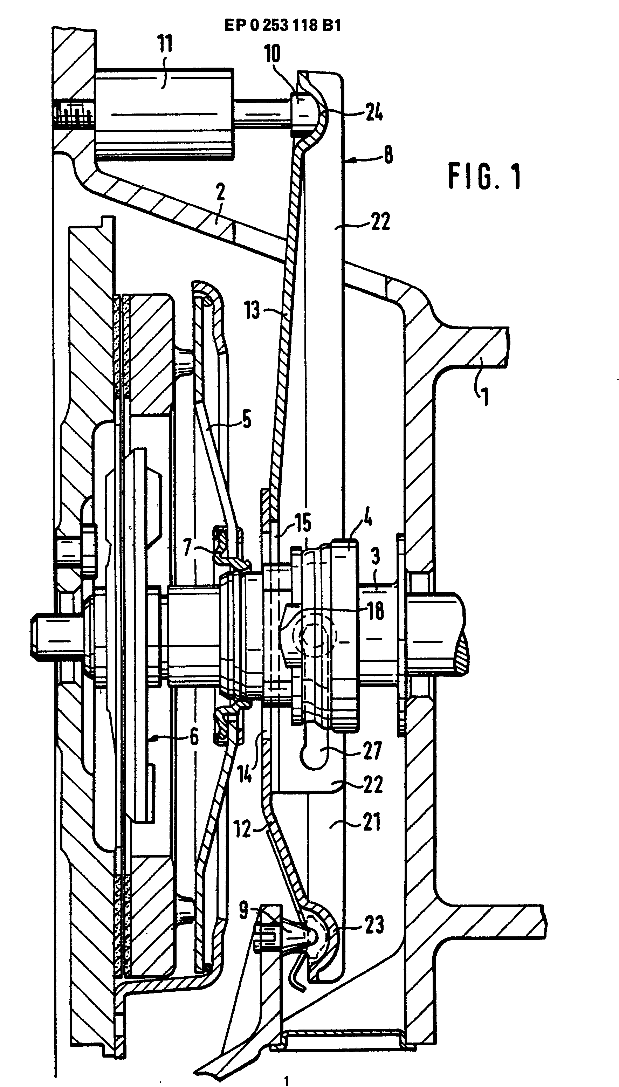

In Figur 1 ist ein Getriebegehäuse 1 angedeutet, das einstückig mit der Kupplungsglocke 2 ausgebildet ist. In dieser ist das auf einem Führungsrohr 3 längsverschieblich zur Kupplungsachse geführte Kupplungsausrücklager 4 angeordnet, das in einem an den Federzungen 5 einer Reibungskupplung 6 befestigten Druckring 7 eingerastet ist.

Zur Längsverschiebung wirkt das Kupplungsausrücklager 4 mit dem Kupplungshebel 8 zusammen, der an seinem einen Ende schwenkbar in dem Abstützbolzen 9 gelagert ist und an dessen anderem Ende der Stößel 10 eines Hydraulikzylinders 11 angreift.

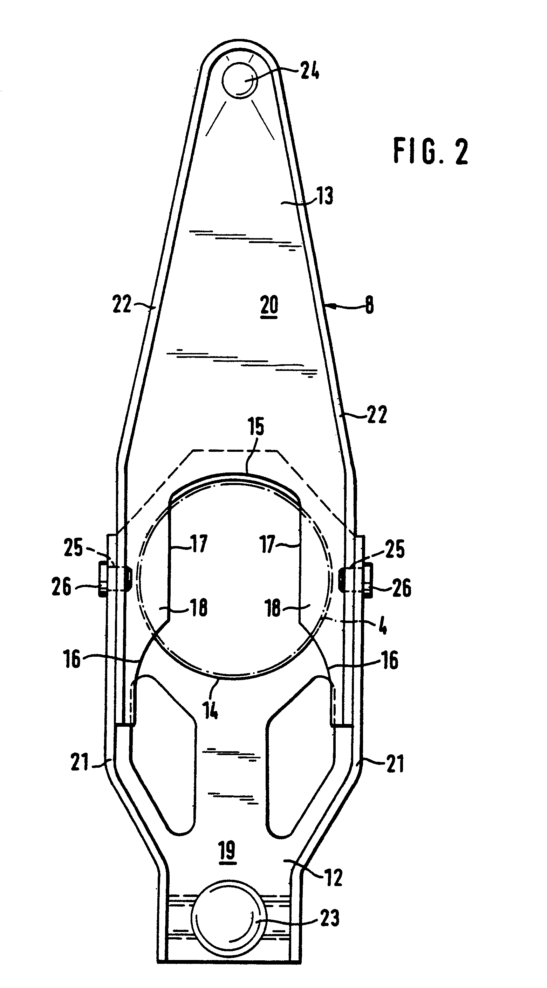

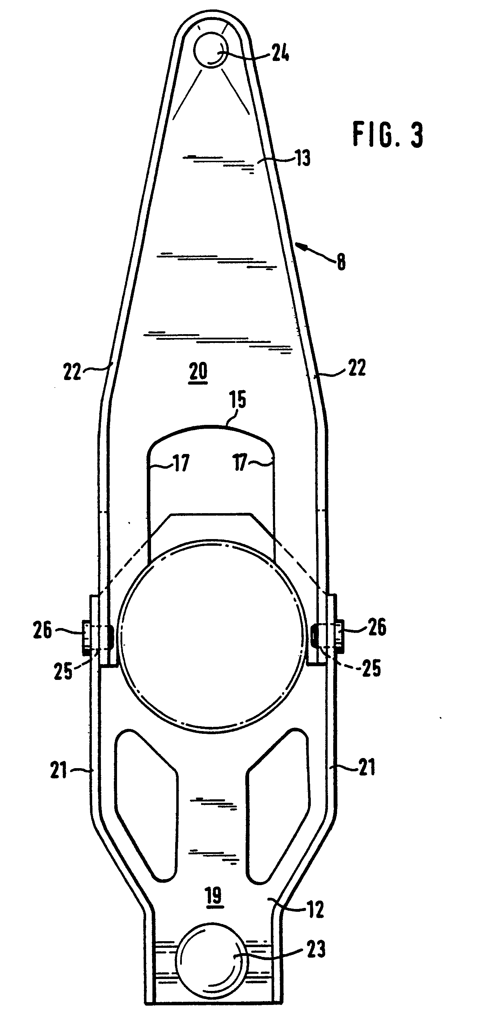

Der Kupplungshebel 8 besteht aus zwei Teilen 12 und 13, die längsverschieblich zueinander geführt sind. Wie insbesondere die Figuren 2 und 3 zeigen, weist jedes der Teile 12 und 13 eine Durchbrechung 14 bzw. 15 auf, in deren Bereich sich die Teile 12 und 13 überdecken. Die Durchbrechung 14 des Teiles 12 ist dabei allseitig größer als die strichpunktiert angedeutete Außenkontur des Kupplungsausrücklagers 4. Die Durchbrechung 15 des Teiles 13 weist ebenfalls einen Bereich 16 auf, der allseitig größer als die Außenkontur des Kupplungsausrücklagers 4 ist, der jedoch in Längsrichtung des Hebels in einen weiteren Bereich übergeht, in dem an zwei einander diametral gegenüberliegenden Stellen der Abstand der seitlichen Begrenzungskanten 17 der Durchbrechung 15 so verringert ist, daß dort Anlageflächen 18 für das Kupplungsausrücklager 4 gebildet sind.

Die Teile 12 und 13 bestehen aus einem flachen Mittelabschnitt 19 bzw. 20 mit seitlich abgewinkelten Rändern 21 bzw. 22, wobei die Teile 12 und 13 so teleskopartig ineinander geführt sind, daß sowohl die Mittelabschnitte 19 und 20 als auch die Ränder 21 und 22 in Gleitkontakt stehen. Das Teil 12 enthält dabei den mit dem Abstützbolzen 9 in Eingriff stehenden Schwenkpunkt 23, während das Teil 13 den Angriffspunkt 24 für den Stößel 10 des Hydraulikzylinders 11 enthält.

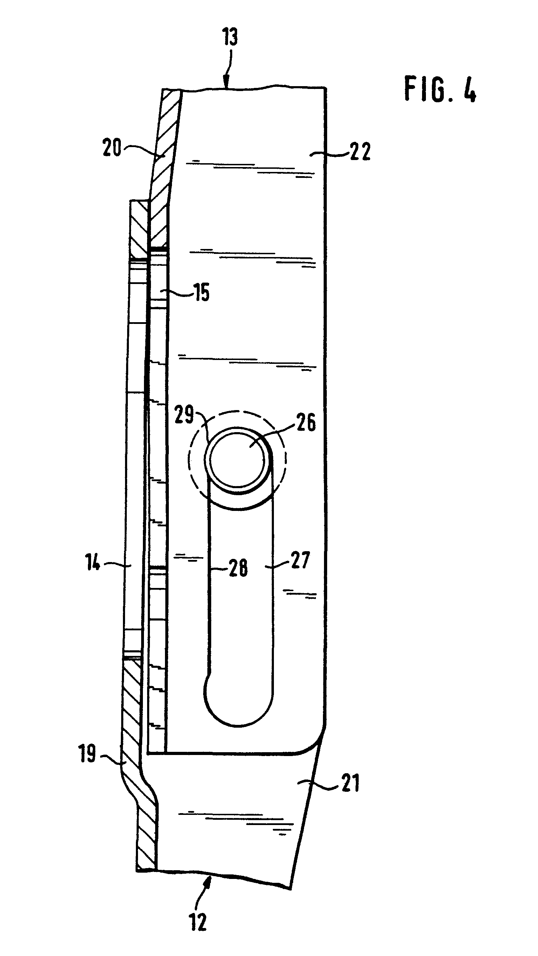

Zur Führung der Teile 12 und 13 sind in fluchtende Bohrungen 25 der Ränder 21 des Teiles 12 Bolzen 26 eingesetzt, die in Längsschlitze 27 in den Rändern 22 des Teiles 13 eingreifen. Wie insbesondere Figur 4 zeigt, sind die sich überdeckenden Teile 12 und 13 in Betriebsstellung, die Figur 2 entspricht, gegen axiale Verschiebung derart gesichert, daß in den Begrenzungskanten 28 der Längsschlitze 27 Ausnehmungen 29 vorgesehen sind, in die die Bolzen 26 einrasten.

Wie inbesondere Figur 1 erkennen läßt, liegen die Anlageflächen 18 des Kupplungshebels 8 zwischen der Reibungskupplung 6 und dem Kupplungsausrücklager 4, so daß ein Abziehen der Kupplungsglocke 2 vom nicht dargestellten Motorblock ohne Beschädigung des Kupplungsausrücklagers 4 bzw. des Druckringes 7 nicht möglich ist.

Zum Auswechseln des Kupplungsausrücklagers 4 werden deshalb die Teile 12 und 13 des Kupplungshebels 8 in die in Figur 3 dargestellte Lage verschoben, in der die Durchbrechungen 14 und 15 der Teile 12 und 13 allseitig größer als die Außenkontur des Kupplungsausrücklagers 4 sind. Nunmehr wird die Kupplungsglocke 2 abgezogen. Anschließend kann die Rastverbindung zwischen dem Kupplungsausrücklager 4 und dem Druckring 7 mit einem geeigneten Werkzeug gelöst und das Kupplungsausrücklager 4 ausgewechselt werden.

## Patentansprüche

1. Kupplungshebel (8) zur Betätigung einer Fahrzeugkupplung (6), der sich einenends an einem Schwenkpunkt (23) abstützt und an dem anderenends ein Betätigungselement (10, 11) angreift, und der zwischen den beiden Enden eine erste Durchbrechung (14) aufweist, allseitig größer als die Außenkontur eines Kupplungsausrücklagers (4) ist und eine zweite Durchbrechung (15) bei der an einander diametral gegenüberliegenden Stellen der Abstand ihrer seitlichen Begrenzungskanten (17) so verringert ist, daß dort Anlageflächen (18) für das Kupplungsausrücklager gebildet sind, dadurch gekennzeichnet, daß der Kupplungshebel (8) aus zwei sich wenigstens im Bereich der Durchbrechungen (14, 15) überdeckenden Teilen (12, 13) besteht, die längsverschieblich zueinander geführt sind, und von denen ein Teil (12) die erste Durchbrechung (14) aufweist, während das andere Teil (13) die zweite Durchbrechung (15) aufweist.

2. Kupplungshebel nach Anspruch 1, dadurch gekennzeichnet, daß das eine Teil (12) den Schwenkpunkt (23) und das andere Teil (13) den Angriffspunkt (24) für das Betätigungselement (10, 11) enthält.

3. Kupplungshebel nach Anspruch 1 oder 2, dadurch gekennzeichnet, daß die beiden Teile (12, 13) aus je einem flachen Mittelabschnitt (19, 20) mit seitlichen abgewinkelten Rändern (21, 22) bestehen, beide Teile (12, 13) so teleskopartig ineinander geführt sind, daß Mittelabschnitte (19, 20) und seitliche Ränder (21, 22) in Gleitkontakt miteinander stehen und in fluchtende Bohrungen (25) der Ränder (21) des einen Teiles (12) Bolzen (26) eingesetzt sind, die in Längsschlitze (27) in den Rändern (22) des anderen Teiles (13) eingreifen.

4. Kupplungshebel nach Anspruch 1, 2 oder 3, dadurch gekennzeichnet, daß die sich überdeckenden Teile (12, 13) in der Betriebsstellung gegen axiale Verschiebung gesichert sind.

5. Kupplungshebel nach einem der vorhergehenden Ansprüche, dadurch gekennzeichnet, daß in den Begrenzungskanten (28) der Längsschlitze (27) Ausnehmungen (29) vorgesehen sind, in die die Bolzen (26) einrasten.

## Claims

1. Clutch lever (8) for actuating a vehicle clutch (6), which is supported at one end at a pivot point (23) and which is engaged at the other end by an actuating element (10, 11), and which comprises between the two ends a first aperture (14) which is larger on all sides than the outer contour of a clutch release bearing (4), and a second aperture (15) in the case of which, at diametrically opposed points, the distance between its side boundary edges (15) is reduced to such an extent that contact faces (18) are formed there for the clutch release bearing, characterised in that the clutch lever (8) consists of two parts (12, 13) which overlap each other at least in the region of the apertures (14, 15), which are guided longitudinally slidably relative to each other, and of which one part (12) comprises the first aperture (14), while the other part (13) comprises the second aperture (15).

2. Clutch lever according to claim 1, characterised in that one part (12) includes the pivot point (23) and the other part (13) includes the point of engagement (24) by the actuating element (10, 11).

3. Clutch lever according to claim 1 or 2, characterised in that the two parts (12, 13) each consist of a flat central section (19, 20) with angled side edges (21, 22), the two parts (12, 13) are guided one inside the other after the fashion of a telescope in such a way that central sections (19, 20) and side edges (21, 22) are in sliding contact with each other, and in aligned bores (25) of the edges (21) of one part (12) are inserted bolts (26) which engage in longitudinal slots (27) in the edges (22) of the other part (13).

4. Clutch lever according to claim 1, 2 or 3, characterised in that the overlapping parts (12, 13) are prevented from sliding axially in the operative position.

5. Clutch lever according to any of the preceding claims, characterised in that in the boundary edges (28) of the longitudinal slots (27) are provided recesses (29) in which the bolts (26) latch.

**Revendications**

1. Levier de débrayage (ou fourchette) (8) pour commander un embrayage (6) de véhicule qui s'appuie à une extrémité sur un point de pivotement (23) et à l'autre extrémité duquel est en prise un élément d'actionnement (10, 11), et qui comporte entre les deux extrémités une première découpure (14) qui est de toutes parts plus grande que le contour extérieur d'une butée de débrayage (4) et une seconde découpure (15) dans laquelle en des points diamétralement opposés la distance de ses bords de délimitation latéraux (15, 17) est réduite de façon telle que des surfaces de contact (18) pour la butée de débrayage y sont formées, caractérisé en ce que le levier de débrayage (8) comprend deux parties (12, 13) se chevauchant au moins dans la zone des découpures (14, 15) qui sont guidées de façon à être mobile longitudinalement l'une par rapport à l'autre et dont une partie (12) comporte la première découpure (14), tandis que l'autre partie (13) comporte la seconde découpure (15).

2. Levier de débrayage selon la revendication 1, caractérisé en ce que la première partie (12) comprend le point de pivotement (23) et la seconde partie (13) le point d'application (24) de l'élément d'actionnement (10, 11).

3. Levier de débrayage selon la revendication 1 ou 2, caractérisé en ce que les deux parties (12, 13) comprennent chacune une section centrale plate (19, 20), avec des bords latéraux repliés (21, 22), les deux parties (12, 13) sont guidées télescopiquement l'une dans l'autre de telle façon que sections centrales (19, 20) et bords latéraux (21, 22) sont en contact mutuel glissant et dans des alésages alignés (25) des bords (21) de la première partie (12) sont insérés des boulons (26) qui s'engagent dans des fentes longitudinales (27) pratiquées dans les bords (22) de la seconde partie (13).

4. Levier de débrayage selon la revendication 1, 2 ou 3, caractérisé en ce qu'en position de fonctionnement les parties (12, 13) qui se chevauchent sont empêchées de se déplacer.

5. Levier de débrayage selon l'une des revendications précédentes, caractérisé en ce qu'on prévoit dans les bords de délimitation (28) des fentes longitudinales (27) des évidements (29) dans lesquels s'engagent les boulons (26).

EP 0 253 118 B1

FIG. 1

FIG. 2

FIG. 3

FIG. 4